(19) Europäisches Patentamt / European Patent Office / Office européen des brevets

(11) **EP 1 359 677 B1**

(12) **EUROPÄISCHE PATENTSCHRIFT**

(45) Veröffentlichungstag und Bekanntmachung des Hinweises auf die Patenterteilung:
**24.06.2009   Patentblatt 2009/26**

(51) Int Cl.:
*H04B 1/69* (2006.01)    *G01S 5/14* (2006.01)
*G01S 1/04* (2006.01)

(21) Anmeldenummer: **03007739.0**

(22) Anmeldetag: **04.04.2003**

(54) **Verfahren und Endgerät zur Verarbeitung eines Navigationssignals mit konstanter Amplitude**

Method and subscriber apparatus for processing of a navigation signal with a constant amplitude

Méthode et terminal pour traiter un signal de navigation avec une amplitude constante

(84) Benannte Vertragsstaaten:
**BE DE FR GB IT NL**

(30) Priorität: **29.04.2002   DE 10219216**

(43) Veröffentlichungstag der Anmeldung:
**05.11.2003   Patentblatt 2003/45**

(73) Patentinhaber: **EUROPEAN SPACE AGENCY**
**75015 Paris (FR)**

(72) Erfinder: **Söllner, Matthias, Dr.**
**82131 Gauting (DE)**

(74) Vertreter: **MERH-IP**
**Matias Erny Reichl Hoffmann**
**Paul-Heyse-Strasse 29**
**80336 München (DE)**

(56) Entgegenhaltungen:
- **BURGER TH. ET AL: 'Selected Signal Analysis Results for Galileo', 11 September 2001, ION GPS 2001, SALT LAKE CITY, UT * Seite 1291 - Seite 1303 ***
- **BETZ J.W.: 'Design and Performance of Code Tracking for the GPS M Code Signal', 19 September 2000, ION GPS 2000, SALT LAKE CITY, UT * Seite 2140 - Seite 2150 ***
- **BARKER CAPT. B.C. ET AL: 'Overview of the GPS M Code Signal', 26 Januar 2000, ION NTM 2000, ANAHEIM, CA * Seite 542 - Seite 549 ***
- **HOLMES J.K.: 'Code Tracking Loop Performance Including the Effects of Channel Filtering and Gaussian Interference', 26 Juni 2000, PROCEEDINGS OF THE IAIN WORLD CONGRESS IN ASSOCIATION WITH THE U.S. ION ANNUAL MEETING, SAN DIEGO, CA * Seite 382 - Seite 398 ***
- **RIES L. ET AL: 'A Software Simulation Tool for GNSS2 BOC Signal Analysis', 24 September 2002, ION GPS 2002, PORTLAND, OR * Seite 2225 - Seite 2239 ***
- **SOELLNER M. ET AL: 'The impact of linear and non-linear signal distortions on Galileo code tracking accuracy', ION GPS 2002, PORTLAND, OR XPBK: M. SOELLNER * Seite 1270 - Seite 1285 ***
- **HEIN G.W. ET AL: 'Status of Galileo Frequency and Signal Design', ION GPS 2002, PORTLAND, OR XP002273300 * Seite 266 - Seite 277 ***

**Beschreibung**

Die vorliegende Erfindung betrifft ein Verfahren und ein Endgerät zur Verarbeitung eines Navigationssignals eines Satelliten-Navigationssystems.

Aus J. W. Betz "Design and Performance of Code Tracking for the GPS M Code Signal", The MITRE Corporation, September 2000 ist bekannt, dass Navigationssignale durch ein BOC-Verfahren (Binary Offset Coding) moduliert werden können.

Neben GPS gibt es noch weitere Satelliten-Navigationssysteme wie GLONASS oder das geplante System GALILEO.

Aufgabe der vorliegenden Erfindung ist es, eine verbesserte Möglichkeit zur Verarbeitung eines empfangenen Navigationssignals in einem Satelliten-Navigationssystem bereitzustellen, bei dem das Navigationssignal durch Modulation von Navigationscodes mit einem komplexen BOC-Signal erzeugt wird. Diese Aufgabe wird gelöst durch die Merkmale der Ansprüche 1 und 6. Die Erfindung umfasst außerdem ein Computer-Programm nach Anspruch 11 und ein Computer-Programm-Produkt nach Anspruch 14.

Die Erfindung umfasst einerseits ein Verfahren zur Verarbeitung eines empfangenen Navigationssignals eines Satelliten-Navigationssystems. Das empfangene Navigationssignal enthält insbesondere maximal vier Navigationscodes. Ohne Beschränkung der Allgemeinheit wird in speziellen Beispielen, die in der späteren speziellen Beschreibung erläutert werden, in der Regel von vier Navigationscodes ausgegangen. Die einzelnen Navigationscodes können dabei für unterschiedlichen Anwendungen oder Nutzergruppen bestimmt oder zugänglich sein. Es kann sich bei den Navigationscodes beispielsweise um verschiedene zivile und militärische Navigationscodes handeln oder es können auch Navigationscodes unterschiedlicher Genauigkeit vorgesehen sein, die von unterschiedlichen Nutzergruppen bzw. Endgeräten je nach Zugangsberechtigung verarbeitet werden können.

Die Navigationscodes sind gemäß der Erfindung mit einem komplexen BOC-Signal mit einer definierten Unterträger-Frequenz moduliert. Der Begriff komplexes Signal ist im mathematischer Sinne komplexer Zahlen zu verstehen, nicht im Hinblick auf eine mögliche Komplexität der Signalstruktur. Es kann grundsätzlich eine geeignete BOC-Modulation der Navigationscodes gewählt werden, die so gewählt ist, dass das resultierende Signal eine konstante Amplitude aufweist. Dieses resultierende Signal wird dann mit einem Trägersignal zur Erzeugung eines auszusendenden Navigationssignals moduliert, wobei dann das Navigationssignal eine Einhüllende mit konstanter Amplitude aufweist. Das Trägersignal liegt beispielsweise in der Größenordnung von 1 GHz oder mehr, beispielsweise zwischen 1 GHz und 2 GHz. Die Navigartionscodes können eine Frequenz von einigen MHz oder einigen zehn MHz aufweisen, beispielsweise zwischen 5 MHz und 20 MHz. Die Unterträger-Frequenz kann in der Größenordnung von einigen MHz oder einigen zehn MHz gewählt werde, beispielsweise zwischen 10 und 50 MHz.

Die Verarbeitung des Navigationssignals erfolgt gemäß der vorliegenden Erfindung durch eine komplexe Korrelation des empfangenen Navigationssignals mit mindestens einem Referenzsignal, wobei jedes Referenzsignal gebildet wird durch eine Multiplikation eines der Navigationscodes mit einem Unterträger-Signal, welches einem Signal entspricht für eine Matched-Filterung derjenigen Anteile des Navigationssignals, die den jeweiligen Navigationscode enthalten. Es werden also Referenz-Signale erzeugt, die bei einer Korrelation mit denjenigen Anteilen des Navigationssignals zusammenwirken, welche in mathematischer Schreibweise ausgedrückt den entsprechenden Navigationscode enthalten, mit dem das Unterträger-Signal multipliziert wird.

Eine Weiterbildung der Erfindung sieht vor, dass das Navigaionssignal mit mindestens einem Referenzsignal korreliert wird, welches sich als Summand einer Umformung des Navigationssignals in eine Summe von Unterträger-Signalen unter Berücksichtigung der Eigenschaften der Navigationscodes ergibt. Es wird also im Rahmen der Umformung betrachtet, wie sich die Navigationscodes verhalten, insbesondere, wann sie welche Werte annehmen können, und es kann dann eine entsprechende Umformung des Navigationssignals zu einer Summe einzelner Unterträger-Signale als Komponenten des Naivgationssignals durchgeführt werden. Diese Umformung kann vor der Durchführung des erfindungsgemäßen Verfahrens erfolgen und das Ergebnis der Umformung entsprechend im Rahmen des Verfahrens implementiert werden.

Insbesondere ist vorgesehen (beispielsweise für den speziellen Fall von vier Navigationscodes) , dass die Verarbeitung des Navigationssignals durch eine komplexe Korrelation mit mindestens einem Referenzsignal erfolgt mit:

$$r_1 = e_1 \cdot C \cdot \left[ \cdot sign\left(\cos(2\pi f_s t)\right) + j\, sign\left(\sin(2\pi f_s t)\right) + (1+j) \cdot \frac{\sqrt{2}}{2} \cdot sign\left(\sin(2\pi f_s t + \pi/4)\right) + (-1+j) \cdot \frac{\sqrt{2}}{2} \cdot sign\left(\sin(2\pi f_s t - \pi/4)\right) \right]$$

$$r_2 = e_2 \cdot C \cdot \left[ \cdot sign\left(\cos(2\pi f_s t)\right) - j\, sign\left(\sin(2\pi f_s t)\right) + (1-j) \cdot \frac{\sqrt{2}}{2} \cdot sign\left(\sin(2\pi f_s t + \pi/4)\right) + (-1-j) \cdot \frac{\sqrt{2}}{2} \cdot sign\left(\sin(2\pi f_s t - \pi/4)\right) \right]$$

$$r_3 = e_3 \cdot C \cdot \left[ \cdot j \cdot sign\left(\cos(2\pi f_s t)\right) + j\, sign\left(\sin(2\pi f_s t)\right) + (-1+j) \cdot \frac{\sqrt{2}}{2} \cdot sign\left(\sin(2\pi f_s t + \pi/4)\right) + (-1-j) \cdot \frac{\sqrt{2}}{2} \cdot sign\left(\sin(2\pi f_s t - \pi/4)\right) \right]$$

$$r_4 = e_4 \cdot C \cdot \left[ \cdot j \cdot sign\left(\cos(2\pi f_s t)\right) - j\, sign\left(\sin(2\pi f_s t)\right) + (1+j) \cdot \frac{\sqrt{2}}{2} \cdot sign\left(\sin(2\pi f_s t + \pi/4)\right) + (1-j) \cdot \frac{\sqrt{2}}{2} \cdot sign\left(\sin(2\pi f_s t - \pi/4)\right) \right]$$

Dabei stellen $e_1$, $e_2$, $e_3$, $e_4$ die Navigationscodes dar und $f_s$ entspricht der Unterträger-Frequenz des BOC-Signals. C ist eine Konstante.

Insbesondere ist vorgesehen, dass durch die komplexe Korrelation des Navigationssignals mit mindestens einem Referenzsignal ein zeitlicher Versatz zwischen einem Navigationscode und einem Referenzsignal ermittelt wird. Damit kann das erfindungsgemäße Verfahren zur Synchronisation zwischen einem Navigationscode und dem entsprechenden Referenzsignal verwendet werden, was eine Basis für eine Positionsbestimmung darstellt.

Für eine Übertragung des Navigationssignals zu einem Endgerät wird in der Regel eine zusätzliche Modulation vorgesehen. Es ist also wie bereits beschrieben das Navigationssignal zusätzlich mit einen Trägersignal moduliert. Vor der komplexen Korrelation erfolgt dann bevorzugt eine Demodulation des Trägersignals.

Die vorliegende Erfindung umfasst weiterhin ein Endgerät für ein Satelliten-Navigationssystem, welches zumindest eine Empfangseinrichtung und eine komplexe Korrelationseinrichtung zum Empfang und zur Verarbeitung eines Navigationssignals aufweist. Die komplexe Korrelationseinrichtung weist erfingungsgemäß mindestens einen komplexen Korrelator auf, der mindestens ein Referenzsignal erzeugt, wobei jedes Referenzsignal gebildet wird durch eine Multiplikation eines der Navigationscodes mit einem Unterträger-Signal, welches einem Signal entspricht für eine Matched-Filterung derjenigen Anteile des Navigationssignals, die den jeweiligen Navigationscode enthalten. Zu den weiteren Eigenschaften, Details und Vorteilen des erfindungsgemäßen Endgerätes können insbesondere analog die obigen Bemerkungen zu dem erfindungsgemäßen Verfahren gelten.

Eine bevorzugte Weiterbildung der Erfindung sieht vor, dass der komplexe Korrelator mindestens ein Referenzsignal erzeugt, welches sich als Summand einer Umformung des Navigationssignals in eine Summe von Unterträger-Signalen unter Berücksichtigung der Eigenschaften der Navigationscodes ergibt.

Insbesondere kann vorgesehen werden, dass die komplexe Korrelationseinrichtung mindestens einen komplexen Korrelator aufweist, der mindestens ein Referenzsignal erzeugt mit:

$$r_1 = e_1 \cdot C \cdot \left[ \cdot sign\left(\cos(2\pi f_s t)\right) + j\, sign\left(\sin(2\pi f_s t)\right) + (1+j) \cdot \frac{\sqrt{2}}{2} \cdot sign\left(\sin(2\pi f_s t + \pi/4)\right) + (-1+j) \cdot \frac{\sqrt{2}}{2} \cdot sign\left(\sin(2\pi f_s t - \pi/4)\right) \right]$$

$$r_2 = e_2 \cdot C \cdot \left[ \cdot sign\left(\cos(2\pi f_s t)\right) - j\, sign\left(\sin(2\pi f_s t)\right) + (1-j) \cdot \frac{\sqrt{2}}{2} \cdot sign\left(\sin(2\pi f_s t + \pi/4)\right) + (-1-j) \cdot \frac{\sqrt{2}}{2} \cdot sign\left(\sin(2\pi f_s t - \pi/4)\right) \right]$$

$$r_3 = e_3 \cdot C \cdot \left[ \cdot j \cdot sign\left(\cos(2\pi f_s t)\right) + j\, sign\left(\sin(2\pi f_s t)\right) + (-1+j) \cdot \frac{\sqrt{2}}{2} \cdot sign\left(\sin(2\pi f_s t + \pi/4)\right) + (-1-j) \cdot \frac{\sqrt{2}}{2} \cdot sign\left(\sin(2\pi f_s t - \pi/4)\right) \right]$$

$$r_4 = e_4 \cdot C \cdot \left[ \cdot j \cdot sign\left(\cos(2\pi f_s t)\right) - j\, sign\left(\sin(2\pi f_s t)\right) + (1+j) \cdot \frac{\sqrt{2}}{2} \cdot sign\left(\sin(2\pi f_s t + \pi/4)\right) + (1-j) \cdot \frac{\sqrt{2}}{2} \cdot sign\left(\sin(2\pi f_s t - \pi/4)\right) \right]$$

Komplexe Korrelationseinrichtung bzw. komplexer Korrelator sind hier ebenfalls im mathematischen Sinne komplexer Zahlen zu verstehen, also Einrichtungen, die zur Verarbeitung von Signalen ausgebildet sind, welche einen Realteil und einen Imaginärteil aufweisen. Mit einem solchen Endgerät können geeignete Navigationssignale verarbeitet werden, die mindestens vier Navigationscodes enthalten und bei denen die Navigationssignale mit einem geeigneten komplexen BOC-Signal mit konstanter Einhüllender moduliert wurden.

Insbesondere ist vorgesehen, dass die komplexe Korrelationseinrichtung derart ausgebildet ist, dass mit Hilfe des mindestens einen komplexen Korrelators ein zeitlicher Versatz zwischen einem Navigationscode des Navigationssignals und einem Referenzsignal ermittelt wird.

Für eine Übertragung des Navigationssignals zu einem Endgerät wird in der Regel eine zusätzliche Modulation vorgesehen. Es ist also in der Regel das Navigationssignal zusätzlich mit einen Trägersignal moduliert. Bevorzugt ist daher vorgesehen, dass der komplexen Korrelationseinrichtung eine Demodulationseinrichtung zur Demodulation eines Trägersignals vorgeschaltet ist.

Das Endgerät kann insbesondere als Teilnehmer-Endgerät ausgebildet sein, beispielsweise als tragbares Endgerät oder als Endgerät, das in ein Land-, Wasseroder Luftfahrzeug integriert ist. Es kann entweder zum Empfang von Navigationssignalen eines einzigen Satelliten-Navigationssystems oder von Navigationssignalen mehrerer Satelliten-Navigationssysteme ausgebildet sein, beispielsweise ein kombiniertes GPS-GALILEO-Endgerät. Das Teilnehmer-Endgerät kann beispielsweise auch als kombiniertes Endgerät eines Funk-Kommunikationssystems und eines Satelliten-Navigationssystems ausgebildet sein, beispielsweise als Mobiltelefon, das zusätzlich Einrichtungen zur Satelliten-Navigation aufweist oder beispielsweise als Satelliten-Navigations-Endgerät, das auch Einrichtungen für einen Datenaustausch über ein Mobilfunk-System aufweist.

Ein weiterer Gegenstand der Erfindung ist ein Computer-Programm zur Ansteuerung einer komplexen Korrelationseinrichtung eines Endgerätes für ein Satelliten-Navigationssystem. Das Computerprogramm ist dabei zur Ansteuerung mindestens eines komplexen Korrelators zur Erzeugung mindestens eines Referenzsignals ausgebildet. Jedes Referenzsignal wird dabei gebildet durch eine Multiplikation eines der Navigationscodes mit einem Unterträger-Signal, welches einem Signal entspricht für eine Matched-Filterung derjenigen Anteile eines Navigationssignals, die den jeweiligen Navigationscode enthalten. Zu den weiteren Eigenschaften, Details und Vorteilen des erfindungsgemäßen Computer-Programms können insbesondere analog die obigen Bemerkungen zu dem erfindungsgemäßen Verfahren gelten.

Eine bevorzugte Weiterbildung der Erfindung sieht vor, dass die Ansteuerung des mindestens einen komplexen Korrelators zur Erzeugung mindestens Referenzsignal derart erfolgt, dass ein Referenzsignal erzeugt wird, welches sich als Summand einer Umformung des Navigationssignals in eine Summe von Unterträger-Signalen unter Berücksichtigung der Eigenschaften der Navigationscodes ergibt.

Eine spezielle Weiterbildung des erfindungsgemäßen Computer-Programm sieht vor, dass das Computer-Programm zur Ansteuerung mindestens eines komplexen Korrelators zur Erzeugung mindestens eines Referenzsignal ausgebildet ist, wobei die erzeugten Referenzsignale definiert sind durch:

$$r_1 = e_1 \cdot C \cdot \left[ \cdot sign\left(\cos(2\pi f_s t)\right) + j\,sign\left(\sin(2\pi f_s t)\right) + (1+j) \cdot \tfrac{\sqrt{2}}{2} \cdot sign\left(\sin(2\pi f_s t + \pi/4)\right) + (-1+j) \cdot \tfrac{\sqrt{2}}{2} \cdot sign\left(\sin(2\pi f_s t - \pi/4)\right) \right]$$

$$r_2 = e_2 \cdot C \cdot \left[ \cdot sign\left(\cos(2\pi f_s t)\right) - j\,sign\left(\sin(2\pi f_s t)\right) + (1-j) \cdot \tfrac{\sqrt{2}}{2} \cdot sign\left(\sin(2\pi f_s t + \pi/4)\right) + (-1-j) \cdot \tfrac{\sqrt{2}}{2} \cdot sign\left(\sin(2\pi f_s t - \pi/4)\right) \right]$$

$$r_3 = e_3 \cdot C \cdot \left[ \cdot j \cdot sign\left(\cos(2\pi f_s t)\right) + j\,sign\left(\sin(2\pi f_s t)\right) + (-1+j) \cdot \tfrac{\sqrt{2}}{2} \cdot sign\left(\sin(2\pi f_s t + \pi/4)\right) + (-1-j) \cdot \tfrac{\sqrt{2}}{2} \cdot sign\left(\sin(2\pi f_s t - \pi/4)\right) \right]$$

$$r_4 = e_4 \cdot C \cdot \left[ \cdot j \cdot sign\left(\cos(2\pi f_s t)\right) - j\,sign\left(\sin(2\pi f_s t)\right) + (1+j) \cdot \tfrac{\sqrt{2}}{2} \cdot sign\left(\sin(2\pi f_s t + \pi/4)\right) + (1-j) \cdot \tfrac{\sqrt{2}}{2} \cdot sign\left(\sin(2\pi f_s t - \pi/4)\right) \right]$$

Schließlich umfasst die vorliegende Erfindung ein Computer-Programm-Produkt, welches zum Zusammenwirken mit einem Endgerät eines Satelliten-Navigationssystems ausgebildet ist und welches einen maschinenlesbaren Programmträger beinhaltet, auf dem ein vorstehend beschriebenes Computer-Programm in Form von elektronisch auslesbaren Steuersignalen gespeichert ist. Die Steuersignale können in jeder geeigneten Form gespeichert sein, die elektronische Auslesung kann dann entsprechend durch elektrische, magnetische, elektromagnetische, elektrooptische oder sonstige elektronische Verfahren erfolgen. Beispiele für solche Programmträger sind Magnetbänder, Disketten, Festplatten, CD-ROM oderHalbleiterbausteine.

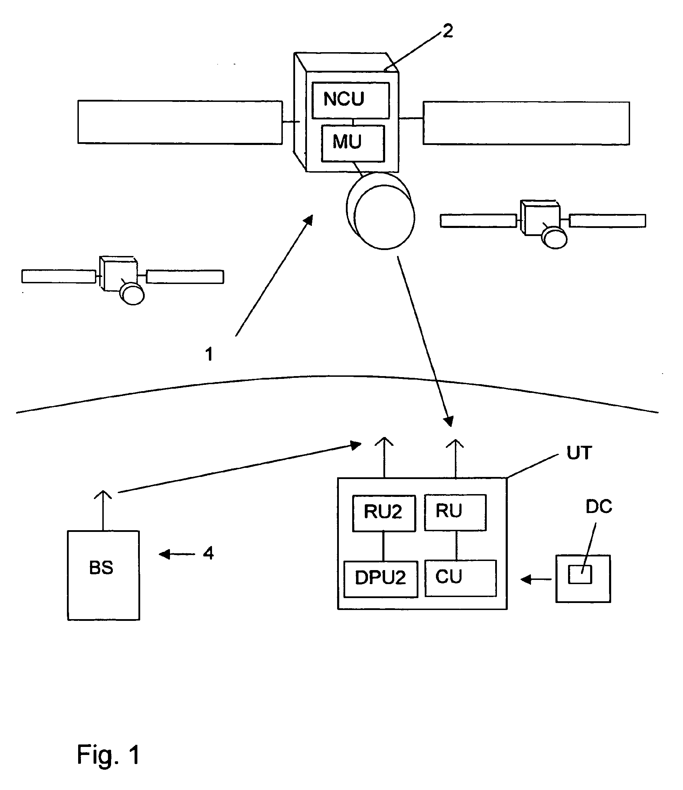

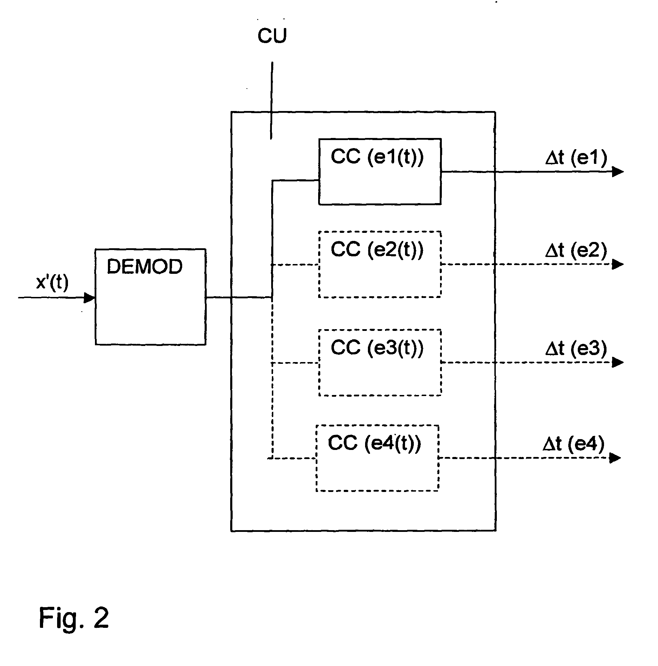

Nachfolgend wird anhand der Figuren 1 und 2 ein spezielles Ausführungsbeispiel der vorliegenden Erfindung erläutert.

Es zeigen:

Fig. 1   Schematische Darstellung eines Satelliten-Navigationssystems

Fig. 2   Schematische Darstellung einer Korrelationseinrichtung nach der vorlie genden Erfindung

Es soll nun eine Anwendung der Erfindung im Rahmen des derzeit geplantenSatelliten-Navigationssystems GALILEO betrachtet werden. Fig. 1 zeigt schematisch ein Teilnehmer-Endgerät (User Terminal) UT für ein Satelliten-Navigationssystem 1, hier für das GALILEO-System. Jeder Navigationssatellit 2 des GALILEO-Navigationssystems 1 weist, schematisch betrachtet, eine Einrichtung NCU (Navigation Code Unit) zur Erzeugung von Navigationscodes e1(t), e2(t), e3(t), e4(t)) auf, wobei die Navigationscodes e1(t), e2(t), e3(t), e4(t) jeweils als Funktion der Zeit die Werte +1 und -1 annehmen können. Weiterhin weist jeder Navigationssatellit 2 eine Einrichtung MU (Modulation Unit) zur Modulation der Navigationscodes e1(t), e2(t), e3(t), e4(t) mit einem komplexen BOC-Signal auf.

Also Ausgangspunkt für Naivgationssignale wird für GALILEO folgende Grundstruktur des Signals vorgeschlagen, das man durch Modulation der Navigationscodes e1(t), e2(t), e3(t), e4(t) mit einem komplexen LOC-Signal (Linear Offset Coding) erhält:

$$x(t) \quad = \quad [e_1(t)+ j \cdot e_3(t)] \cdot \exp(j \cdot 2\pi f_s t)+[e_2(t)+ j \cdot e_4(t)] \cdot \exp(- j \cdot 2\pi f_s t)$$

j stellt dabei die imaginäre Einheit mit $j^2 = -1$ dar. Weiter stellt $f_s$ den Unterträger des LOC-Signals dar. Berücksichtigt man die Eingenschaften der Navigationscodes e1(t), e2(t), e3(t), e4(t)), insbesondere deren zeitlichen Verlauf, so kann man das o.g. Signal x(t) grundsätzlich umschreiben in eine Form: *

$$x(t)= \begin{cases} 2 \cdot \sin(2\pi f_s t + k_1 \cdot \pi/2) \cdot [1+ j \cdot k_2] & (\text{Fall 1}) \\ 2 \cdot \sqrt{2} \cdot (j)^{k_1} \cdot \sin(2\pi f_s t + k_2 \cdot \pi/4) & (\text{Fall 2}) \end{cases},$$

wobei $k_1 \in \{1,2,3,4\}$ und $k_2 \in \{-1, +1\}$.

Wählt man nun weiterhin einen Übergang $\sin(x) \rightarrow \frac{1}{\sqrt{2}} \cdot sign(\sin(x))$, so erhält man ein alternatives BOC Signal

$$x'(t)= \begin{cases} \sqrt{2} \cdot sign(\sin(2\pi f_s t + k_1 \cdot \pi/2)) \cdot [1+ j \cdot k_2] & (\text{Fall 1}) \\ 2 \cdot (j)^{k_1} \cdot sign(\sin(2\pi f_s t + k_2 \cdot \pi/4)) & (\text{Fall 2}) \end{cases},$$

mit der wichtigen Eigenschaft konstanter Amplitude.

Unter der Kenntnis dieser Umformungen und unter Berücksichtigung der Eigenschaften der Navigationscodes e1(t), e2(t), e3(t), e4(t)) und des Zusammenhangs zwischen $k_1$ und $k_2$ und den Navigationscodes e1(t), e2(t), e3(t), e4 (t)) der lässt sich das o.g. LOC-Signal zu einer Summe von Unterträger-Signalen umformen, die zumnindest folgende Summanden enthält:

$$x(t) = \begin{array}{l} e_1 \cdot \left[ \tfrac{1}{2} \cdot \exp(j \cdot 2\pi f_s t) + (1+j) \cdot \tfrac{\sqrt{2}}{4} \cdot \sin(2\pi f_s t + \pi/4) + (-1+j) \cdot \tfrac{\sqrt{2}}{4} \cdot \sin(2\pi f_s t - \pi/4) \right] + \\[4pt] e_2 \cdot \left[ \tfrac{1}{2} \cdot \exp(- j \cdot 2\pi f_s t) + (1-j) \cdot \tfrac{\sqrt{2}}{4} \cdot \sin(2\pi f_s t + \pi/4) + (-1-j) \cdot \tfrac{\sqrt{2}}{4} \cdot \sin(2\pi f_s t - \pi/4) \right] + \\[4pt] e_3 \cdot \left[ \tfrac{1}{2} \cdot j \cdot \exp(j \cdot 2\pi f_s t) + (-1+j) \cdot \tfrac{\sqrt{2}}{4} \cdot \sin(2\pi f_s t + \pi/4) + (-1-j) \cdot \tfrac{\sqrt{2}}{4} \cdot \sin(2\pi f_s t - \pi/4) \right] + \\[4pt] e_4 \cdot \left[ \tfrac{1}{2} \cdot j \cdot \exp(- j \cdot 2\pi f_s t) + (1+j) \cdot \tfrac{\sqrt{2}}{4} \cdot \sin(2\pi f_s t + \pi/4) + (1-j) \cdot \tfrac{\sqrt{2}}{4} \cdot \sin(2\pi f_s t - \pi/4) \right] + \\[4pt] e_1 \cdot e_2 \cdot e_3 \left[ \tfrac{1}{2} \cdot j \cdot \exp(- j \cdot 2\pi f_s t) + (-1-j) \cdot \tfrac{\sqrt{2}}{4} \cdot \sin(2\pi f_s t + \pi/4) + (-1+j) \cdot \tfrac{\sqrt{2}}{4} \cdot \sin(2\pi f_s t - \pi/4) \right] + \\[4pt] e_1 \cdot e_2 \cdot e_4 \left[ \tfrac{1}{2} \cdot j \cdot \exp(j \cdot 2\pi f_s t) + (1-j) \cdot \tfrac{\sqrt{2}}{4} \cdot \sin(2\pi f_s t + \pi/4) + (1+j) \cdot \tfrac{\sqrt{2}}{4} \cdot \sin(2\pi f_s t - \pi/4) \right] + \\[4pt] e_1 \cdot e_3 \cdot e_4 \left[ \tfrac{1}{2} \cdot \exp(- j \cdot 2\pi f_s t) + (-1+j) \cdot \tfrac{\sqrt{2}}{4} \cdot \sin(2\pi f_s t + \pi/4) + (1+j) \cdot \tfrac{\sqrt{2}}{4} \cdot \sin(2\pi f_s t - \pi/4) \right] + \\[4pt] e_2 \cdot e_3 \cdot e_4 \left[ \tfrac{1}{2} \cdot \exp(j \cdot 2\pi f_s t) + (-1-j) \cdot \tfrac{\sqrt{2}}{4} \cdot \sin(2\pi f_s t + \pi/4) + (1-j) \cdot \tfrac{\sqrt{2}}{4} \cdot \sin(2\pi f_s t - \pi/4) \right] \end{array}$$

Das letztentlich erwünschten Navigationssinal x'(t) erhält man daraus durch die Transformationen $\sin(x) \rightarrow sign(\sin(x))$ und $\cos(x) \rightarrow sign(\cos(x))$ und durch Modulation des resultierenden Signals mit einem geeigneten hochfrequenten Trägersignal. Man erkennt, dass in dieser Form des Navigationssignals nun vier Summanden vorliegen, die durch ein Produkt eines Unterträger-Signals mit einem einzigen Navigationscode gebildet werden. Diese Unterträger-Signale werden für die erfindungsgemäße Verarbeitung des Navigationssignals in den komplexen Korrelatoren des Endgerätes verwendet.

Das so erhaltene Navigationssgnal x'(t) wird vom Navigationssatelliten 2 an das Endgerät UT übertragen, dort von einer Empfangseinrichtung RU (Receive Unit) empfangen und in einer Korrelationseinrichtung CU (Correlation Unit) durch geeignete komplexe Korrelation verarbeitet.

Fig. 2 zeigt schematisch die Korrelationseinrichtung CU des Engerätes UT. Weiterhin zeigt Fig. 2 die Demodulationseinrichtung DEMOD zur Demodulation des Trägersignals, die der Korrelationseinrichtung CU vorgeschaltet ist. Der Demodulationseinrichtung DEMOD wird das empfangene Navigationssignal x'(t) zugeführt. Es wird das Trägersignal demoduliert und das so demodulierte Signal wird der Korrelationseinrichtung CU zugeführt. Diese weist mindestens einen komplexen Korrelator CC (ei(t)) mit i= 1, 2, 3, 4 auf. Je nachem, welchen der Navigationscodes das Endgerät verarbeiten darf oder soll, ist die komplexe Korrelationseinrichtung zur Verarbeitung des entsprechenden Navigationscodes e1(t), e2(t), e3(t), e4(t) ausgebildet. Es kann also die komplexe Korrelationseinrichtung einen, zwei, drei oder vier komplexe Korrelatoren CC (ei(t)) aufweisen.

Es sind alle Navigationscodes e1(t), e2(t), e3(t), e4(t)) in dem Navigationssignal enthalten. Durch Korrelation des Navigationssignals mit einem Referenzsignal $r_1$, $r_2$, $r_3$, $r_4$ mit

$$r_1 = e_1 \cdot C \cdot \left[ \cdot sign\left(\cos\left(2\pi f_s t\right)\right) + j\, sign\left(\sin\left(2\pi f_s t\right)\right) + \left(1+j\right) \cdot \frac{\sqrt{2}}{2} \cdot sign\left(\sin\left(2\pi f_s t + \pi/4\right)\right) + \left(-1+j\right) \cdot \frac{\sqrt{2}}{2} \cdot sign\left(\sin\left(2\pi f_s t - \pi/4\right)\right) \right]$$

$$r_2 = e_2 \cdot C \cdot \left[ \cdot sign\left(\cos\left(2\pi f_s t\right)\right) - j\, sign\left(\sin\left(2\pi f_s t\right)\right) + \left(1-j\right) \cdot \frac{\sqrt{2}}{2} \cdot sign\left(\sin\left(2\pi f_s t + \pi/4\right)\right) + \left(-1-j\right) \cdot \frac{\sqrt{2}}{2} \cdot sign\left(\sin\left(2\pi f_s t - \pi/4\right)\right) \right]$$

$$r_3 = e_3 \cdot C \cdot \left[ \cdot j \cdot sign\left(\cos\left(2\pi f_s t\right)\right) + j\, sign\left(\sin\left(2\pi f_s t\right)\right) + \left(-1+j\right) \cdot \frac{\sqrt{2}}{2} \cdot sign\left(\sin\left(2\pi f_s t + \pi/4\right)\right) + \left(-1-j\right) \cdot \frac{\sqrt{2}}{2} \cdot sign\left(\sin\left(2\pi f_s t - \pi/4\right)\right) \right]$$

$$r_4 = e_4 \cdot C \cdot \left[ \cdot j \cdot sign\left(\cos\left(2\pi f_s t\right)\right) - j\, sign\left(\sin\left(2\pi f_s t\right)\right) + \left(1+j\right) \cdot \frac{\sqrt{2}}{2} \cdot sign\left(\sin\left(2\pi f_s t + \pi/4\right)\right) + \left(1-j\right) \cdot \frac{\sqrt{2}}{2} \cdot sign\left(\sin\left(2\pi f_s t - \pi/4\right)\right) \right]$$

kann eine Synchronisation des Referenzsignals mit dem entsprechenden Navigationscode erfolgen. Es entspricht dabei das Referenzsignal $r_1$ dem Navigationscode e1(t), das Referenzsignal $r_2$ dem Navigationscode e2(t) usw. Man erhält als Ergebnis den zeitlichen Versatz $\Delta t(e1)$, $\Delta t(e2)$, $\Delta t(e3)$, $\Delta t(e4)$ zwischen einem Referenzsignal und dem entsprechenden Navigationscode. Dieser zeitliche Versatz wird als Basis für eine Positionsbestimmung des Endgerätes ermittelt.

Das Teilnehmer-Endgerät UT kann zusätzlich als Endgerät eines weiteren Funk-Kommunikationssystems, beispielsweise zusätzlich als Endgerät eines Mobilfunk-Systems 4 ausgebildet sein. Dieses Mobilfunk-System ist in Fig. 2 exemplarisch in Form einer Basisstation (Base Station) BS des Mobilfunk-Systems angedeutet. Das Teilnehmer-Endgerät weist in diesem Fall eine zweite Empfangseinrichtung RU2 und eine Datenverarbeitungseinrichtung DPU zum Empfang und zur Verarbeitung von Daten des Mobilfunk-Systems auf. Es kann also beispielsweise als Mobiltelefon ausgebildet sein, das zusätzlich eine Satelliten-Navigationseinrichtung beinhaltet.

Das Teilnehmer-Endgerät UT kann insbesondere mit Hilfe eines Computer-Programms zur Verarbeitung des Navigationssignals des Satelliten-Navigationssystems nach dem bereits beschriebenen Verfahren eingerichtet werden, wenn die sonstigen Hardware-Voraussetzungen in dem Teilnehmer-Endgerät UT gegeben sind. Das Computer-Programm ermöglicht dann insbesondere die Ansteuerung der komplexen Korrelationseinrichtung CU, speziell der komplexen Korrelatoren CC(ei(t)) zur Erzeugung der oben genannten Referenzsignale.

Das Computer-Programm kann bevorzugt mit Hilfe eines Computer-Programm-Produktes in das Teilnehmer-Endgerät UT eingebracht werden, wobei das Computer-Programm-Produkt einen maschinenlesbaren Programmträger (Data Carrier) DC beinhaltet, auf dem das Computer-Programm in Form von elektronisch auslesbaren Steuersignalen gespeichert ist. Ein Beispiel wäre eine Chipkarte mit einem Halbleiterchip, in dem das Computerprogramm gespeichert ist. Es sind aber auch alle anderen geeigneten Arten von Computer-Programm-Produkten anwendbar.

**Patentansprüche**

1. Verfahren zur Verarbeitung eines empfangenen Navigationssignals eines Satelliten-Navigationssystems (1), das mindestens vier Navigationscodes ($e_1(t)$, $e_2(t)$, $e_3(t)$, $e_4(t)$) enthält und mit einem Trägersignal moduliert ist, durch ein Endgerät, wobei die

   Verarbeitung des empfangenen Navigationssignals in dem Endgerät durch eine Demodulation des Trägersignals und eine anschließende komplexe Korrelation des demodulierten Navigationssignals x'(t) mit mindestens einem Referenzsignal (r$_1$, r$_2$, r$_3$, r$_4$) mit der Form:

$$r_1 = e_1 \cdot C \cdot \left[ \cdot sign\left(\cos(2\pi f_s t)\right) + j \, sign\left(\sin(2\pi f_s t)\right) + (1+j) \cdot \frac{\sqrt{2}}{2} \cdot sign\left(\sin(2\pi f_s t + \pi/4)\right) + (-1+j) \cdot \frac{\sqrt{2}}{2} \cdot sign\left(\sin(2\pi f_s t - \pi/4)\right) \right] ;$$

$$r_2 = e_2 \cdot C \cdot \left[ \cdot sign\left(\cos(2\pi f_s t)\right) - j \, sign\left(\sin(2\pi f_s t)\right) + (1-j) \cdot \frac{\sqrt{2}}{2} \cdot sign\left(\sin(2\pi f_s t + \pi/4)\right) + (-1-j) \cdot \frac{\sqrt{2}}{2} \cdot sign\left(\sin(2\pi f_s t - \pi/4)\right) \right] ;$$

$$r_3 = e_3 \cdot C \cdot \left[ \cdot j \cdot sign\left(\cos(2\pi f_s t)\right) + j \, sign\left(\sin(2\pi f_s t)\right) + (-1+j) \cdot \frac{\sqrt{2}}{2} \cdot sign\left(\sin(2\pi f_s t + \pi/4)\right) + (-1-j) \cdot \frac{\sqrt{2}}{2} \cdot sign\left(\sin(2\pi f_s t - \pi/4)\right) \right] ;$$

und/oder

$$r_4 = e_4 \cdot C \cdot \left[ \cdot j \cdot sign\left(\cos(2\pi f_s t)\right) - j \, sign\left(\sin(2\pi f_s t)\right) + (1+j) \cdot \frac{\sqrt{2}}{2} \cdot sign\left(\sin(2\pi f_s t + \pi/4)\right) + (1-j) \cdot \frac{\sqrt{2}}{2} \cdot sign\left(\sin(2\pi f_s t - \pi/4)\right) \right] ,$$

und/oder
erfolgt, wodurch ein zeitlicher Versatz ($\Delta t(e_1)$, $\Delta t(e_2)$, $\Delta t(e_3)$ $\Delta t(e_4)$) zwischen einem Navigationscode ($e_1(t)$, $e_2(t)$, $e_3(t)$, $e_4(t)$) und dem mindestens einen Referenzsignal (r$_1$, r$_2$, r$_3$, r$_4$) ermittelt wird.

2. Endgerät (UT) für ein Satelliten-Navigationssystem (1), zumindest aufweisend eine Empfangseinrichtung (RU), eine komplexe Korrelationseinrichtung (CU) zum Empfang und zur Verarbeitung eines Navigationssignals und eine Demodulationseinrichtung (DEMOD) zur Demodulation eines kompexen Trägersignals, welche der Korrelationseinrichtung (CU) vorgeschaltet ist, wobei die komplexe Korrelationseinrichtung mindestens einen komplexen Korrelator (CC(e1(t)), CC(e2(t)), CC(e3(t)), CC(e4(t))) aufweist, der zum Erzeugen mindestens eines Referenzsignals (r$_1$, r$_2$, r$_3$, r$_4$) mit:

$$r_1 = e_1 \cdot C \cdot \left[ \cdot sign\left(\cos(2\pi f_s t)\right) + j \, sign\left(\sin(2\pi f_s t)\right) + (1+j) \cdot \frac{\sqrt{2}}{2} \cdot sign\left(\sin(2\pi f_s t + \pi/4)\right) + (-1+j) \cdot \frac{\sqrt{2}}{2} \cdot sign\left(\sin(2\pi f_s t - \pi/4)\right) \right] ;$$

$$r_2 = e_2 \cdot C \cdot \left[ \cdot sign\left(\cos(2\pi f_s t)\right) - j \, sign\left(\sin(2\pi f_s t)\right) + (1-j) \cdot \frac{\sqrt{2}}{2} \cdot sign\left(\sin(2\pi f_s t + \pi/4)\right) + (-1-j) \cdot \frac{\sqrt{2}}{2} \cdot sign\left(\sin(2\pi f_s t - \pi/4)\right) \right] ;$$

$$r_3 = e_3 \cdot C \cdot \left[ \cdot j \cdot sign\left(\cos(2\pi f_s t)\right) + j \, sign\left(\sin(2\pi f_s t)\right) + (-1+j) \cdot \frac{\sqrt{2}}{2} \cdot sign\left(\sin(2\pi f_s t + \pi/4)\right) + (-1-j) \cdot \frac{\sqrt{2}}{2} \cdot sign\left(\sin(2\pi f_s t - \pi/4)\right) \right] ;$$

und/oder

$$r_4 = e_4 \cdot C \cdot \left[ \cdot j \cdot sign\left(\cos(2\pi f_s t)\right) - j \, sign\left(\sin(2\pi f_s t)\right) + (1+j) \cdot \frac{\sqrt{2}}{2} \cdot sign\left(\sin(2\pi f_s t + \pi/4)\right) + (1-j) \cdot \frac{\sqrt{2}}{2} \cdot sign\left(\sin(2\pi f_s t - \pi/4)\right) \right] ,$$

und zur komplexen Korrelation des demodulierten Navigationssignals (x'(t)) mit dem mindestens einen Referenzsignal (r$_1$, r$_2$, r$_3$, r$_4$) ausgelegt ist,

wobei durch die komplexe Korrelation ein zeitlicher Versatz ($\Delta t(e_1)$, $\Delta t(e_2)$, $\Delta t(e_3)$ $\Delta t(e_4)$)) zwischen einem in dem Navigationssignal enthaltenen Navigationscode ($e_1$ (t), $e_2$ (t), $e_3$ (t) , $e_4$ (t) ) und dem mindestens einen Referenzsignal ($r_1$, $r_2$, $r_3$, $r_4$) ermittelt wird.

3. Computer-Programm zur Ansteuerung einer komplexen Korrelationseinrichtung eines Endgerätes (UT) für ein Satelliten-Navigationssystem (1), **dadurch gekennzeichnet, dass** das Computerprogramm zur Ansteuerung mindestens eines komplexen Korrelators ($CC(e_1$ (t)), $CC(e_2(t))$, $CC(e_3$ (t)), $CC(e_4(t))$) zur Erzeugung mindestens eines Referenzsignals ($r_1$, $r_2$, $r_3$, $r_4$) ausgebildet ist, mit:

$$r_1 = e_1 \cdot C \cdot \left[ \cdot sign\left(\cos(2\pi f_s t)\right) + j\,sign\left(\sin(2\pi f_s t)\right) + (1+j) \cdot \tfrac{\sqrt{2}}{2} \cdot sign\left(\sin(2\pi f_s t + \pi/4)\right) + (-1+j) \cdot \tfrac{\sqrt{2}}{2} \cdot sign\left(\sin(2\pi f_s t - \pi/4)\right) \right] ;$$

$$r_2 = e_2 \cdot C \cdot \left[ \cdot sign\left(\cos(2\pi f_s t)\right) - j\,sign\left(\sin(2\pi f_s t)\right) + (1-j) \cdot \tfrac{\sqrt{2}}{2} \cdot sign\left(\sin(2\pi f_s t + \pi/4)\right) + (-1-j) \cdot \tfrac{\sqrt{2}}{2} \cdot sign\left(\sin(2\pi f_s t - \pi/4)\right) \right] ;$$

$$r_3 = e_3 \cdot C \cdot \left[ \cdot j \cdot sign\left(\cos(2\pi f_s t)\right) + j\,sign\left(\sin(2\pi f_s t)\right) + (-1+j) \cdot \tfrac{\sqrt{2}}{2} \cdot sign\left(\sin(2\pi f_s t + \pi/4)\right) + (-1-j) \cdot \tfrac{\sqrt{2}}{2} \cdot sign\left(\sin(2\pi f_s t - \pi/4)\right) \right] ;$$

und/oder

$$r_4 = e_4 \cdot C \cdot \left[ \cdot j \cdot sign\left(\cos(2\pi f_s t)\right) - j\,sign\left(\sin(2\pi f_s t)\right) + (1+j) \cdot \tfrac{\sqrt{2}}{2} \cdot sign\left(\sin(2\pi f_s t + \pi/4)\right) + (1-j) \cdot \tfrac{\sqrt{2}}{2} \cdot sign\left(\sin(2\pi f_s t - \pi/4)\right) \right] ,$$

und zur komplexen Korrelation eines demodulierten Navigationssignals (x'(t)) mit dem wenigstens einen Referenzsignal ($r_1$, $r_2$, $r_3$, $r_4$) ausgelegt ist, wodurch ein zeitlicher Versatz ($\Delta t(e_1)$, $\Delta t(e_2)$, $\Delta t(e_3)$ $\Delta t(e_4)$)) zwischen einem Navigationscode ($e_1(t)$, $e_2(t)$, $e_3(t)$, $e_4(t)$) und dem mindestens einen Referenzsignal ($r_1$, $r_2$, $r_3$, $r_4$) ermittelt wird.

4. Computer-Programm-Produkt, welches zum Zusammenwirken mit einem Endgerät (UT) eines Satelliten-Navigationssystems (1) ausgebildet ist und welches einen maschinenlesbaren Programmträger (DC) beinhaltet, auf dem ein Computer-Programm nach Anspruch 3 in Form von elektronisch auslesbaren Steuersignalen gespeichert ist.

$$r_1 = e_1 \cdot C \cdot \left[ \cdot sign\left(\cos(2\pi f_s t)\right) + j\,sign\left(\sin(2\pi f_s t)\right) + (1+j) \cdot \tfrac{\sqrt{2}}{2} \cdot sign\left(\sin(2\pi f_s t + \pi/4)\right) + (-1+j) \cdot \tfrac{\sqrt{2}}{2} \cdot sign\left(\sin(2\pi f_s t - \pi/4)\right) \right] ;$$

$$r_2 = e_2 \cdot C \cdot \left[ \cdot sign\left(\cos(2\pi f_s t)\right) - j\,sign\left(\sin(2\pi f_s t)\right) + (1-j) \cdot \tfrac{\sqrt{2}}{2} \cdot sign\left(\sin(2\pi f_s t + \pi/4)\right) + (-1-j) \cdot \tfrac{\sqrt{2}}{2} \cdot sign\left(\sin(2\pi f_s t - \pi/4)\right) \right] ;$$

$$r_3 = e_3 \cdot C \cdot \left[ \cdot j \cdot sign\left(\cos(2\pi f_s t)\right) + j\,sign\left(\sin(2\pi f_s t)\right) + (-1+j) \cdot \tfrac{\sqrt{2}}{2} \cdot sign\left(\sin(2\pi f_s t + \pi/4)\right) + (-1-j) \cdot \tfrac{\sqrt{2}}{2} \cdot sign\left(\sin(2\pi f_s t - \pi/4)\right) \right] ;$$

und/oder

$$r_4 = e_4 \cdot C \cdot \left[ \cdot j \cdot sign\left(\cos(2\pi f_s t)\right) - j\,sign\left(\sin(2\pi f_s t)\right) + (1+j) \cdot \tfrac{\sqrt{2}}{2} \cdot sign\left(\sin(2\pi f_s t + \pi/4)\right) + (1-j) \cdot \tfrac{\sqrt{2}}{2} \cdot sign\left(\sin(2\pi f_s t - \pi/4)\right) \right] ,$$

## Claims

1. A method for processing a received navigation signal of a satellite navigation system (1), which contains at least four navigation codes ($e_1$ (t), $e_2(t)$, $e_3(t)$, $e_4(t)$) and is modulated by a carrier signal, by using a user terminal, wherein the processing of the received navigation signal is made in the user terminal by demodulating the carrier signal and subsequently correlating the demodulated navigation signal x'(t) in a complex manner with at least one reference signal ($r_1$, $r_2$, $r_3$, $r_4$) of the following form:

$$r_1 = e_1 \cdot C \cdot \left[ \cdot sign\left(\cos(2\pi f_l)\right) + j\,sign\left(\sin(2\pi f_l)\right) + (1+j)\cdot\frac{\sqrt{2}}{2}\cdot sign\left(\sin(2\pi f_l + \pi/4)\right) + (-1+j)\cdot\frac{\sqrt{2}}{2}\cdot sign\left(\sin(2\pi f_l - \pi/4)\right) \right];$$

$$r_2 = e_2 \cdot C \cdot \left[ \cdot sign\left(\cos(2\pi f_l)\right) - j\,sign\left(\sin(2\pi f_l)\right) + (1-j)\cdot\frac{\sqrt{2}}{2}\cdot sign\left(\sin(2\pi f_l + \pi/4)\right) + (-1-j)\cdot\frac{\sqrt{2}}{2}\cdot sign\left(\sin(2\pi f_l - \pi/4)\right) \right];$$

$$r_3 = e_3 \cdot C \cdot \left[ \cdot j\cdot sign\left(\cos(2\pi f_l)\right) + j\,sign\left(\sin(2\pi f_l)\right) + (-1+j)\cdot\frac{\sqrt{2}}{2}\cdot sign\left(\sin(2\pi f_l + \pi/4)\right) + (-1-j)\cdot\frac{\sqrt{2}}{2}\cdot sign\left(\sin(2\pi f_l - \pi/4)\right) \right];$$

and/or

$$r_4 \approx e_4 \cdot C \cdot \left[ \cdot j\cdot sign\left(\cos(2\pi f_l)\right) - j\,sign\left(\sin(2\pi f_l)\right) + (1+j)\cdot\frac{\sqrt{2}}{2}\cdot sign\left(\sin(2\pi f_l + \pi/4)\right) + (1-j)\cdot\frac{\sqrt{2}}{2}\cdot sign\left(\sin(2\pi f_l - \pi/4)\right) \right],$$

which means that a temporal offset ($\Delta t(e_1)$, $\Delta t(e_2)$, $\Delta t(e_3)$, $\Delta t(e_4)$) will be obtained between a navigation code ($e_1(t)$, $e_2(t)$, $e_3(t)$, $e_4(t)$) and the at least one reference signal ($r_1$, $r_2$, $r_3$, $r_4$).

2. A user terminal (UT) for a satellite navigation system (1), having at least a receiver unit (RU), a complex correlation unit (CU) for receiving and processing a navigation signal and a demodulation unit (DEMOD) for demodulating a complex carrier signal, which is connected upstream of the correlation unit (CU), the complex correlation unit having at least one complex correlator (CC(e1 (t)), CC(e2(t)), CC(e3(t)), CC(e4(t))) laid out to generate at least one reference signal ($r_1$, $r_2$, $r_3$, $r_4$) having:

$$r_1 = e_1 \cdot C \cdot \left[ \cdot sign\left(\cos(2\pi f_l)\right) + j\,sign\left(\sin(2\pi f_l)\right) + (1+j)\cdot\frac{\sqrt{2}}{2}\cdot sign\left(\sin(2\pi f_l + \pi/4)\right) + (-1+j)\cdot\frac{\sqrt{2}}{2}\cdot sign\left(\sin(2\pi f_l - \pi/4)\right) \right];$$

$$r_2 = e_2 \cdot C \cdot \left[ \cdot sign\left(\cos(2\pi f_l)\right) - j\,sign\left(\sin(2\pi f_l)\right) + (1-j)\cdot\frac{\sqrt{2}}{2}\cdot sign\left(\sin(2\pi f_l + \pi/4)\right) + (-1-j)\cdot\frac{\sqrt{2}}{2}\cdot sign\left(\sin(2\pi f_l - \pi/4)\right) \right];$$

$$r_3 = e_3 \cdot C \cdot \left[ \cdot j\cdot sign\left(\cos(2\pi f_l)\right) + j\,sign\left(\sin(2\pi f_l)\right) + (-1+j)\cdot\frac{\sqrt{2}}{2}\cdot sign\left(\sin(2\pi f_l + \pi/4)\right) + (-1-j)\cdot\frac{\sqrt{2}}{2}\cdot sign\left(\sin(2\pi f_l - \pi/4)\right) \right];$$

and/or

$$r_4 \approx e_4 \cdot C \cdot \left[ \cdot j\cdot sign\left(\cos(2\pi f_l)\right) - j\,sign\left(\sin(2\pi f_l)\right) + (1+j)\cdot\frac{\sqrt{2}}{2}\cdot sign\left(\sin(2\pi f_l + \pi/4)\right) + (1-j)\cdot\frac{\sqrt{2}}{2}\cdot sign\left(\sin(2\pi f_l - \pi/4)\right) \right],$$

and to correlate the demodulated navigation signal (x'(t)) in a complex manner with the at least one reference signal ($r_1$, $r_2$, $r_3$, $r_4$), wherein a temporal offset ($\Delta t(e_1)$, $\Delta t(e_2)$, $\Delta t(e_3)$, $\Delta t(e_4)$) is obtained between a navigation code ($e_1(t)$, $e_2(t)$, $e_3(t)$, $e_4(t)$) contained in the navigation signal and the at least one reference signal ($r_1$, $r_2$, $r_3$, $r_4$) by the complex correlation.

3. A computer program for driving a complex correlation unit of a user terminal (UT) for a satellite navigation system (1), **characterized in that** the computer program for driving at least one complex correlator (CC(e1(t)), CC(e2(t)), CC(e3(t)), CC(e4(t))) is developed for generating at least one reference signal ($r_1$, $r_2$, $r_3$, $r_4$) having:

$$r_1 = e_1 \cdot C \cdot \left[ \cdot sign(\cos(2\pi f_l t)) + j\, sign(\sin(2\pi f_l t)) + (1+j) \cdot \tfrac{\sqrt{2}}{2} \cdot sign(\sin(2\pi f_l t + \pi/4)) + (-1+j) \cdot \tfrac{\sqrt{2}}{2} \cdot sign(\sin(2\pi f_l t - \pi/4)) \right];$$

$$r_2 = e_2 \cdot C \cdot \left[ \cdot sign(\cos(2\pi f_l t)) - j\, sign(\sin(2\pi f_l t)) + (1-j) \cdot \tfrac{\sqrt{2}}{2} \cdot sign(\sin(2\pi f_l t + \pi/4)) + (-1-j) \cdot \tfrac{\sqrt{2}}{2} \cdot sign(\sin(2\pi f_l t - \pi/4)) \right];$$

$$r_3 = e_3 \cdot C \cdot \left[ \cdot j \cdot sign(\cos(2\pi f_l t)) + j\, sign(\sin(2\pi f_l t)) + (-1+j) \cdot \tfrac{\sqrt{2}}{2} \cdot sign(\sin(2\pi f_l t + \pi/4)) + (-1-j) \cdot \tfrac{\sqrt{2}}{2} \cdot sign(\sin(2\pi f_l t - \pi/4)) \right];$$

and/or

$$r_4 = e_4 \cdot C \cdot \left[ \cdot j \cdot sign(\cos(2\pi f_l t)) - j\, sign(\sin(2\pi f_l t)) + (1+j) \cdot \tfrac{\sqrt{2}}{2} \cdot sign(\sin(2\pi f_l t + \pi/4)) + (1-j) \cdot \tfrac{\sqrt{2}}{2} \cdot sign(\sin(2\pi f_l t - \pi/4)) \right],$$

and is laid out for correlating a demodulated navigation signal (x'(t)) in a complex manner with the at least one reference signal ($r_1$, $r_2$, $r_3$, $r_4$), thereby obtaining a temporal offset ($\Delta t(e_1)$, $\Delta t(e_2)$, $\Delta t(e_3)$, $\Delta t(e_4)$) between a navigation code ($e_1(t)$, $e_2(t)$, $e_3(t)$, $e_4(t)$) and the at least one reference signal ($r_1$, $r_2$, $r_3$, $r_4$).

4. The computer program product developed for interacting with a user terminal (UT) of a satellite navigation system (1) and including a computer-readable program carrier (DC) onto which a computer program according to claim 3 is stored in the form of electronically readable control signals.

**Revendications**

1. Procédé de traitement d'un signal de navigation reçu d'un système de navigation par satellite (1), qui comprend au moins quatre codes de navigation ($e_1(t)$, $e_2(t)$, $e_3(t)$, $e_4(t)$) et est modulé avec un signal de porteuse, réalisé par un appareil final, dans lequel le traitement du signal de navigation reçu dans l'appareil final s'effectue dans l'appareil final grâce à une démodulation du signal de porteuse et une corrélation complexe consécutive du signal de navigation démodulé x'(t) avec au moins un signal de référence ($r_1$, $r_2$, $r_3$, $r_4$) de la forme :

$$r_1 = e_1 \cdot C \cdot \left[ \cdot sign(\cos(2\pi f_l t)) + j\, sign(\sin(2\pi f_l t)) + (1+j) \cdot \tfrac{\sqrt{2}}{2} \cdot sign(\sin(2\pi f_l t + \pi/4)) + (-1+j) \cdot \tfrac{\sqrt{2}}{2} \cdot sign(\sin(2\pi f_l t - \pi/4)) \right];$$

$$r_2 = e_2 \cdot C \cdot \left[ \cdot sign(\cos(2\pi f_l t)) - j\, sign(\sin(2\pi f_l t)) + (1-j) \cdot \tfrac{\sqrt{2}}{2} \cdot sign(\sin(2\pi f_l t + \pi/4)) + (-1-j) \cdot \tfrac{\sqrt{2}}{2} \cdot sign(\sin(2\pi f_l t - \pi/4)) \right];$$

$$r_3 = e_3 \cdot C \cdot \left[ \cdot j \cdot sign(\cos(2\pi f_l t)) + j\, sign(\sin(2\pi f_l t)) + (-1+j) \cdot \tfrac{\sqrt{2}}{2} \cdot sign(\sin(2\pi f_l t + \pi/4)) + (-1-j) \cdot \tfrac{\sqrt{2}}{2} \cdot sign(\sin(2\pi f_l t - \pi/4)) \right];$$

et/ ou

$$r_4 = e_4 \cdot C \cdot \left[ \cdot j \cdot sign(\cos(2\pi f_l t)) - j\, sign(\sin(2\pi f_l t)) + (1+j) \cdot \tfrac{\sqrt{2}}{2} \cdot sign(\sin(2\pi f_l t + \pi/4)) + (1-j) \cdot \tfrac{\sqrt{2}}{2} \cdot sign(\sin(2\pi f_l t - \pi/4)) \right],$$

moyennant quoi un retard temporel ($\Delta t(e_1)$, $\Delta t(e_2)$, $\Delta t(e_3)$, $\Delta t(e_4)$) est calculé entre un code de navigation ($e_1(t)$, $e_2(t)$, $e_3(t)$, $e_4(t)$) et au moins un signal de référence ($r_1$, $r_2$, $r_3$, $r_4$).

2. Appareil final (UT) pour un système de navigation par satellite (1), comportant au moins une unité de réception (RU), une unité de corrélation complexe (CU) pour la réception et pour le traitement d'un signal de navigation et une unité de démodulation (DEMOD) pour la démodulation d'un signal de porteuse complexe, qui est placée dans le circuit avant l'unité de corrélation (CU), dans lequel l'unité de corrélation complexe comprend au moins un corrélateur complexe (CC($e_1$(t)), CC(e2(t)), CC(e3(t)), CC(e4(t))), qui est conçu pour la production d'au moins un signal de référence ($r_1$, $r_2$, $r_3$, $r_4$) avec :

$$r_1 = e_1 \cdot C \cdot \left[ \cdot sign\left(cos(2\pi f_f)\right) + j\,sign\left(sin(2\pi f_f)\right) + (1+j) \cdot \frac{\sqrt{2}}{2} \cdot sign\left(sin(2\pi f_f + \pi/4)\right) + (-1+j) \cdot \frac{\sqrt{2}}{2} \cdot sign\left(sin(2\pi f_f - \pi/4)\right) \right] ;$$

$$r_2 = e_2 \cdot C \cdot \left[ \cdot sign\left(cos(2\pi f_f)\right) - j\,sign\left(sin(2\pi f_f)\right) + (1-j) \cdot \frac{\sqrt{2}}{2} \cdot sign\left(sin(2\pi f_f + \pi/4)\right) + (-1-j) \cdot \frac{\sqrt{2}}{2} \cdot sign\left(sin(2\pi f_f - \pi/4)\right) \right] ;$$

$$r_3 = e_3 \cdot C \cdot \left[ \cdot j \cdot sign\left(cos(2\pi f_f)\right) + j\,sign\left(sin(2\pi f_f)\right) + (-1+j) \cdot \frac{\sqrt{2}}{2} \cdot sign\left(sin(2\pi f_f + \pi/4)\right) + (-1-j) \cdot \frac{\sqrt{2}}{2} \cdot sign\left(sin(2\pi f_f - \pi/4)\right) \right] ;$$

et/ou

$$r_4 = e_4 \cdot C \cdot \left[ \cdot j \cdot sign\left(cos(2\pi f_f)\right) - j\,sign\left(sin(2\pi f_f)\right) + (1+j) \cdot \frac{\sqrt{2}}{2} \cdot sign\left(sin(2\pi f_f + \pi/4)\right) + (1-j) \cdot \frac{\sqrt{2}}{2} \cdot sign\left(sin(2\pi f_f - \pi/4)\right) \right] ,$$

et pour la corrélation complexe du signal de navigation démodulé (x'(t)) avec au moins un signal de référence ($r_1$, $r_2$, $r_3$, $r_4$), où, grâce à la corrélation complexe, un retard temporel ($\Delta t(e_1)$, $\Delta t(e_2)$, $\Delta t(e_3)$, $\Delta t(e_4)$) est calculé entre un code de navigation ($e_1$(t), $e_2$(t), $e_3$(t), $e_4$(t)) contenu dans le signal de navigation et au moins un signal de référence ($r_1$, $r_2$, $r_3$, $r_4$).

3. Logiciel pour la commande d'une unité de corrélation complexe d'un appareil final (UT) pour un système de navigation par satellite (1), **caractérisé en ce que** le logiciel est conçu pour la commande d'au moins un corrélateur complexe (CC($e_1$(t)), CC(e2(t)), CC(e3(t)), CC(e4(t))), pour la production d'au moins un signal de référence ($r_1$, r2, r3, r4) avec :

$$r_1 = e_1 \cdot C \cdot \left[ \cdot sign\left(cos(2\pi f_f)\right) + j\,sign\left(sin(2\pi f_f)\right) + (1+j) \cdot \frac{\sqrt{2}}{2} \cdot sign\left(sin(2\pi f_f + \pi/4)\right) + (-1+j) \cdot \frac{\sqrt{2}}{2} \cdot sign\left(sin(2\pi f_f - \pi/4)\right) \right] ;$$

$$r_2 = e_2 \cdot C \cdot \left[ \cdot sign\left(cos(2\pi f_f)\right) - j\,sign\left(sin(2\pi f_f)\right) + (1-j) \cdot \frac{\sqrt{2}}{2} \cdot sign\left(sin(2\pi f_f + \pi/4)\right) + (-1-j) \cdot \frac{\sqrt{2}}{2} \cdot sign\left(sin(2\pi f_f - \pi/4)\right) \right] ;$$

$$r_3 = e_3 \cdot C \cdot \left[ \cdot j \cdot sign\left(cos(2\pi f_f)\right) + j\,sign\left(sin(2\pi f_f)\right) + (-1+j) \cdot \frac{\sqrt{2}}{2} \cdot sign\left(sin(2\pi f_f + \pi/4)\right) + (-1-j) \cdot \frac{\sqrt{2}}{2} \cdot sign\left(sin(2\pi f_f - \pi/4)\right) \right] ;$$

et/ou

$$r_4 = e_4 \cdot C \cdot \left[ \cdot j \cdot sign\left(cos(2\pi f_f)\right) - j\,sign\left(sin(2\pi f_f)\right) + (1+j) \cdot \frac{\sqrt{2}}{2} \cdot sign\left(sin(2\pi f_f + \pi/4)\right) + (1-j) \cdot \frac{\sqrt{2}}{2} \cdot sign\left(sin(2\pi f_f - \pi/4)\right) \right] ,$$

et pour la corrélation complexe d'un signal de navigation démodulé (x'(t)) avec au moins un signal de référence ($r_1$, $r_2$, $r_3$, $r_4$), moyennant quoi un retard temporel ($\Delta t(e_1)$, $\Delta t(e_2)$, $\Delta t(e_3)$, $\Delta t(e_4)$) est calculé entre un code de navigation ($e_1$(t), $e_2$(t), $e_3$(t), $e_4$(t)) et au moins un signal de référence ($r_1$, $r_2$, $r_3$, $r_4$).

4. Produit logiciel, qui est conçu pour coopérer avec un appareil final (UT) d'un système de navigation par satellite (1) et qui comprend un support de programme lisible par la machine (DC), sur lequel est enregistré un logiciel selon la revendication 3 sous la forme de signaux de commande lisibles de manière électronique.

Fig. 1

EP 1 359 677 B1

Fig. 2

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

• **J. W. Betz.** Design and Performance of Code Tracking for the GPS M Code Signal. *The MITRE Corporation,* September 2000